# EUROPEAN PATENT SPECIFICATION

(11) **EP 1 110 627 B1**
(45) Date of publication and mention of the grant of the patent: **03.09.2003**
(21) Application number: 00128315.9
(22) Date of filing: 22.12.2000
(51) Int. Cl.: B08B 15/02, F24C 15/20

(54) **Kitchen exhaust hood**
Dunstabzugshaube für Küchen
Hotte d'évacuation pour la cuisine

(30) Priority: 24.12.1999 IT BO990145 U
(43) Date of publication of application: 27.06.2001
(73) Proprietor: Gitronica S.r.l., 62010 Montelupone (IT)
(72) Inventor: Senigagliesi, Maurizio, 62012 Civitanova Marche (IT)
(74) Representative: Jorio, Paolo

(56) References cited:
- EP-A- 0 283 795
- EP-A- 0 382 710
- EP-A- 0 748 639
- EP-A- 0 884 116
- EP-A- 0 965 795
- US-A- 5 371 491
- US-A- 5 397 960
- US-A- 5 642 784
- DATABASE WPI Section PQ, Week 9541 Derwent Publications Ltd., London, GB; Class P86, AN 1995-314217 XP002144471 -& JP 07 210191 A (MATSUSHITA ELECTRIC WORKS LTD.), 11 August 1995 (1995-08-11)
- DATABASE WPI Section EI, Week 9938 Derwent Publications Ltd., London, GB; Class S04, AN 1999-445050 XP002144472 & CN 1 216 836 A (COSTEL ELECTRONICS CO. LTD.), 19 May 1999 (1999-05-19) -& US 6 047 049 A (YOO) 4 April 2000 (2000-04-04)
- PATENT ABSTRACTS OF JAPAN vol. 018, no. 613 (M-1709), 22 November 1994 (1994-11-22) -& JP 06 235267 A (TAKAKIYO SANGYO KK), 23 August 1994 (1994-08-23)
- PATENT ABSTRACTS OF JAPAN vol. 015, no. 289 (C-0852), 23 July 1991 (1991-07-23) -& JP 03 103258 A (TOYO NETSU KOGYO KK), 30 April 1991 (1991-04-30)
- PATENT ABSTRACTS OF JAPAN vol. 007, no. 081 (M-205), 5 April 1983 (1983-04-05) -& JP 58 008932 A (MATSUSHITA ELECTRIC IND. CO. LTD.), 19 January 1983 (1983-01-19)
- PATENT ABSTRACTS OF JAPAN vol. 1995, no. 08, 29 September 1995 (1995-09-29) & JP 07 139777 A (FUJITSU GENERAL LTD.), 30 May 1995 (1995-05-30)
- PATENT ABSTRACTS OF JAPAN vol. 009, no. 155 (M-392), 29 June 1985 (1985-06-29) & JP 60 030915 A (SHARP CORP.), 16 February 1985 (1985-02-16)

## Description

The present invention relates to an exhaust hood, in particular for kitchen use.

As is known, exhaust hoods are used in kitchens for removing cooking smoke and steam. A first type substantially comprises a sheet metal outer enclosure connected to the outside of the building by a smoke and steam exhaust pipe and housing a suction device defined by a fan powered by a respective electric motor. When the hood cannot be connected to the outside of the building by an exhaust pipe, a second type of exhaust hood, in addition to the suction device, also comprises a filter for purifying and then feeding the smoke and steam back into the environment.

So far, inventions relating to exhaust hoods have all been aimed at improving fan suction or filtration performance, with absolutely no regard to the many other functions which may be performed by an electric household appliance which very often is located centrally with respect to the other kitchen appliances. Moreover, an exhaust hood is located within easy reach of anyone in the kitchen or using the cooker, and is normally clearly visible from any point within the kitchen.

According to the present invention there is provided an exhaust hood as claimed in the accompanying independent Claim.

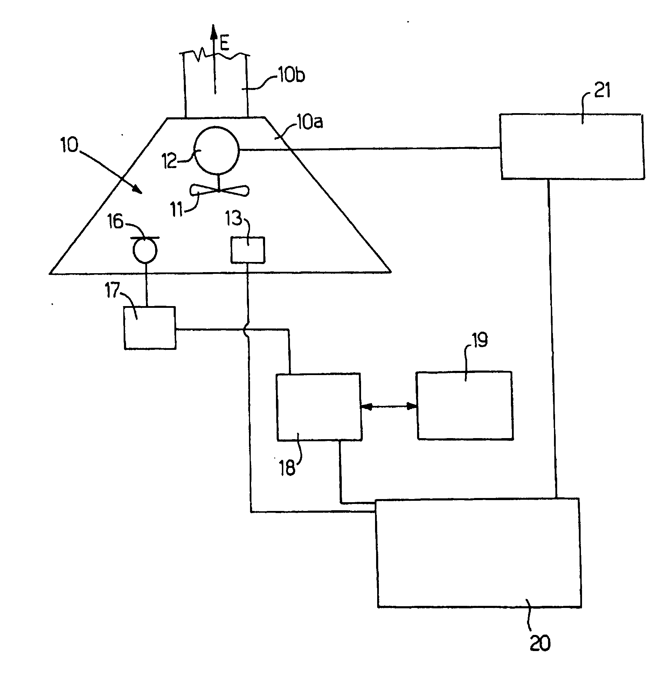

The present invention will be described with reference to the accompanying drawing showing a nonlimiting embodiment by way of example.

Number 10 in the accompanying drawing indicates an exhaust hood in accordance with the present invention, and which comprises a shaped sheet metal enclosure 10a possibly welded to an exhaust pipe 10b for expelling cooking smoke and steam into the outside atmosphere E. Enclosure 10a houses in known manner a fan 11, which is rotated by an electric motor 12 activated by a control device 13 comprising a keyboard or a number of pushbuttons, or by voice control means as described later on.

The characteristic of hood 10 according to the present invention is that sound control means 16, 17, 18, 19, 20, 21 are capable of detecting the sounds characteristic of each type of cooking process, so that the suction speed of fan 11 may be selected accordingly. For example, oil frying in a pan on a burner or hot-plate beneath hood 10 emits sounds typical of that type of cooking process, and which, compared by the system with those stored in an appropriate data bank, indicates the type of cooking process and so enables the system to select the most appropriate speed of fan 11.

Enclosure 10a may also comprise a microphone 16 connected to an A/D analog-digital converting device 17 for converting a user-imparted voice command into a train of binary signals, which are transmitted to a voice recognition device 18 connected electronically in known manner to an electronic data bank 19 containing user voice recordings. All operations are controlled by an electronic central control unit 20, which activates electric motor 12 via an electronic actuating device 21.

By speaking into microphone 16, the user may therefore activate motor 12 and, hence, fan 11 to expel any smoke or steam along pipe 10b into the outside atmosphere E.

This type of control is particularly useful when both the user's hands are engaged, or to start fan 11 without touching control device 13 when the user's hands are greasy or wet, thus keeping enclosure 10a and device 13 clean and also preventing any moisture on the user's hands from coming into contact with live devices.

Electronic data bank 19 may contain voice recordings of most-frequent users, so that central control unit 20 and device 21 may operate fan 11 at the speed preferred by each user and possibly also vary other operating parameters of fan 11. That is, together with electronic data bank 19, central control unit 20 recognizes the voice of a particular user by comparing it with the recorded voices stored in data bank 19, and so commands rotation of fan 11 at that particular user's selected speed. As will be clear to anyone skilled in the art, a particular voice command may also be issued each time, at the user's discretion, to determine a given speed or other operating parameters of fan 11.

The suction speed of fan 11 may also be selected on the basis of a user voice command defining the type of food being cooked and/or the type of cooking process. For example, in response to the user saying the word "fry", fan 11 may be activated at maximum speed to expel the smoke produced by the food being fried as fast as possible. The system therefore does not only recognize the user's voice by comparing it with those stored in a data bank, but is also capable of recognizing individual words such as "fast", "slow", etc. and so adjusting exhaust speed accordingly.

## Claims

1. An exhaust hood (10) comprising an enclosure (10a), an exhaust pipe (10b), and suction means (11, 12) for conveying cooking smoke and/or steam to the outside atmosphere (E) along said exhaust pipe (10b); wherein the exhaust hood (10) comprises sound control means (16, 17, 18, 19, 20, 21) for activating said suction means (11, 12); the exhaust hood (10) being **characterized by** the fact that said sound control means (16, 17, 18, 19, 20, 21) are activated by the characteristic sounds of the type of cooking process being used; and by the fact that the suction speed of said suction means (11, 12) is selected by an electronic central control unit (20) on the basis of said characteristic sounds.

## Patentansprüche

1. Dunstabzugshaube (10), aufweisend ein Gehäuse (10a), einen Austragschlauch (10b) und eine Absaugeinrichtung (11, 12) zum Fördern von Kochrauch und/oder -dampf in die Außenatmosphäre (E) entlang dem Austragrohr (10b), wobei die Dunstabzugshaube (10) Geräuschsteuereinrichtungen (16, 17, 18, 19, 20, 21) zum Aktivieren der Absaugeinrichtung (11, 12) umfasst, wobei die Abzughaube (10) **dadurch gekennzeichnet ist, dass** die Geräuschsteuereinrichtungen (16, 17, 18, 19, 20, 21) durch das charakteristische Geräusch der Art des verwendeten Kochprozesaes aktiviert werden, und dass die Absauggeschwindigkeit der Ansaugeinrichtung (11, 12) durch eine elektronische zentrale Steuereinheit (20) auf Grundlage des charakteristischen Geräusches gewählt wird.

## Revendications

1. Hotte d'évacuation (10) comportant une enceinte (10a), un tuyau d'évacuation (10b), et des moyens d'aspiration (11, 12) destinés à transporter de la fumée et/ou de la vapeur de cuisson vers l'atmosphère extérieure (E) le long dudit tuyau d'évacuation (10b); la hotte d'évacuation (10) comportant des moyens de commande sonore (16, 17, 18, 19, 20, 21) destinés à activer lesdits moyens d'aspiration (11, 12); la hotte d'évacuation (10) étant **caractérisée par le fait que** lesdits moyens de commande sonore (16, 17, 18, 19, 20, 21) sont activés par les sons caractéristiques du type de processus de cuisson qui est utilisé; et **par le fait que** la vitesse d'aspiration desdits moyens d'aspiration (11, 12) est sélectionnée par une unité de commande centrale électronique (20) sur la base desdits sons caractéristiques.
